# FASCICULE DE BREVET EUROPEEN

(11) **EP 1 554 744 B1**
(45) Date de publication et mention de la délivrance du brevet: **17.08.2011**
(21) Numéro de dépôt: 03776950.2
(22) Date de dépôt: 02.10.2003
(51) Int. Cl.: H01H 83/10, H02H 9/04

(54) **DISPOSITIF DE PROTECTION CONTRE LES SURTENSIONS A ELECTRODE MOBILE**
ÜBERSPANNUNGSSCHUTZVORRICHTUNG MIT BEWEGBARER ELEKTRODE
DEVICE FOR PROTECTION AGAINST VOLTAGE SURGES WITH MOBILE ELECTRODE

(30) Priorité: 25.10.2002 FR 0213378
(43) Date de publication de la demande: 20.07.2005
(73) Titulaire: Schneider Electric Industries SAS, 92500 Rueil-Malmaison (FR)
(72) Inventeur: DICONNE, Robert, F-38360 Sassenage (FR); DOMEJEAN, Eric, F-38340 Voreppe (FR)
(74) Mandataire: Tripodi, Paul
(86) Numéro de dépôt international: PCT/FR2003/002885
(87) Numéro de publication internationale: WO 2004/042762

(56) Documents cités:
- EP-A- 0 441 722
- DE-A- 3 228 471
- DE-A- 3 812 058
- DE-A- 19 819 792
- US-A- 6 118 639

## Description

### DOMAINE TECHNIQUE DE L'INVENTION

L'invention est relative à un appareillage destiné à dévier une onde de courant électrique vers la terre lorsque la tension d'une ligne dépasse un seuil donné.

### ETAT DE LA TECHNIQUE ANTERIEURE

Dans le document DE 32 28 471 est décrit un dispositif de ce type, formé par deux branches de circuit parallèles disposées entre une borne d'entrée reliée à une ligne et une borne de sortie reliée à la terre. L'une des branches comporte un éclateur, l'autre branche une varistance. On sait que l'éclateur a un temps de réponse plus élevé que la varistance. Lorsque apparaît entre les bornes une faible surtension caractéristique d'un coup de foudre situé à longue distance du dispositif, la varistance devient passante en l'espace de quelques nanosecondes et le courant s'écoule sans donner lieu à une mise en service de éclateur, car la tension d'amorçage de l'éclateur n'est jamais atteinte. Lorsque apparaît entre les bornes une forte surtension, caractéristique d'un coup de foudre à proximité immédiate du dispositif, la varistance réagit la première mais la tension aux bornes de l'éclateur est suffisante pour que l'éclateur devienne passant, ce qui permet de limiter le courant traversant par la suite la varistance. Toutefois, la branche du circuit comportant la varistance reste passante lorsque l'éclateur entre en service. La varistance n'est donc pas protégée efficacement en cas d'onde de courant de suite longue. Il existe donc un risque de dégradation de la varistance. Lorsque la varistance se dégrade, elle laisse passer un courant de fuite en permanence. De plus, elle risque de ne plus atteindre la tension d'amorçage de l'éclateur. Il est donc proposé d'insérer dans la branche comportant la varistance un moyen de surveillance de l'état de la varistance, assurant une déconnexion de la branche dans laquelle se trouve la varistance lorsque les caractéristiques de la varistance se sont dégradées. Dans ce cas, le dispositif continue de fonctionner dans un mode dégradé, où la protection n'est assurée que par l'éclateur.

Par ailleurs, le bon fonctionnement du dispositif est tributaire d'un appariement judicieux des composants, garantissant une plage de recouvrement précise entre le domaine de fonctionnement de la varistance et celui de l'éclateur. Il est en effet indispensable que la varistance soit apte à supporter des tensions supérieures à la tension d'amorçage de l'éclateur, mais également que la varistance atteigne rapidement la tension d'amorçage de l'éclateur. Ceci impose l'utilisation de composants à faible dispersion des caractéristiques courant/tension, et dont les caractéristiques soient relativement constantes dans le temps, d'où un prix de revient élevé.

Pour répondre à ce deuxième problème, il a été proposé dans le document DE 38 12 058 de connecter une impédance en série sur la branche de circuit comportant la varistance. Les caractéristiques de l'impédance sont choisies de manière judicieuse pour que la transition entre le mode de fonctionnement à éclateur non passant et le mode de fonctionnement à éclateur passant se fasse de manière relativement insensible aux variations des caractéristiques de la varistance et de l'éclateur. Toutefois, cet artifice ne répond pas au problème de vieillissement prématuré de la varistance.

Dans le document FR 1.052.741 est décrit par ailleurs un parafoudre à transfert d'arc comportant deux électrodes métalliques de puissance situées à distance l'une de l'autre, et une électrode intermédiaire constituée par une résistance semi-conductrice disposée en série avec l'une des électrodes métalliques et faisant saillie vers l'autre électrode métallique. En cas de surtension, un arc de décharge s'amorce d'abord à l'extrémité de l'électrode résistive puis migre pour venir s'amorcer ensuite entre les deux électrodes métalliques. L'électrode résistive d'un tel parafoudre se maintient en série pour des décharges de faible amplitude et de courte durée et est court-cuircuitée pour des décharges de grande amplitude ou de longue durée. On obtient ainsi une certaine protection de l'électrode résistive. C'est du moins ce qui est affirmé dans le document. En fait, dans certaines conditions d'utilisation, l'arc peut se dédoubler ou avoir un comportement d'oscillation entre l'électrode résistive et l'électrode de puissance à laquelle est connectée. De plus, il apparaît difficile de définir avec précision la tension d'amorçage du dispositif, qui sera tributaire de l'état de surface de l'électrode résistive et de l'électrode métallique lui faisant face, des caractéristiques de l'électrode résistive ainsi que de tous les paramètres caractéristiques de la tension disruptive dans le gaz ou sont plongées les électrodes, à savoir en première approximation la distance entre l'électrode résistive et l'électrode lui faisant face et la pression du gaz, mais également la forme des électrodes et les caractéristiques du milieu gazeux, perméabilité, humidité, température ou pression. Le document EP-A-0441722 est considéré comme l'état de la technique le plus proche de l'objet de la revendication 1 et décrit un dispositif de protection contre les surtensions, comportant:
- une première électrode de raccordement en liaison électrique avec une première plage de raccordement,
- une deuxième électrode de raccordement en liaison électrique avec une deuxième plage de raccordement,
- une troisième électrode de commutation d'arc mobile reliée électriquement à la deuxième plage de raccordement,
- une chambre d'extinction d'arc s'ouvrant sur la première et la deuxième électrodes de raccordement,
- des moyens d'entraînement de l'électrode de commutation d'arc mobile par rapport à la première électrode de raccordement d'une position de service à une position de commutation en s'éloignant de la première électrode de raccordement et en se rapprochant de la deuxième électrode de raccordement,
- un dipôle électrique connecté de telle manière que lorsque l'électrode de commutation d'arc mobile est en position de service, le dipôle électrique est relié à l'électrode de commutation d'arc mobile d'une part et à la deuxième plage de raccordement d'autre part, le dipôle électrique ayant une résistance ohmique variant non linéairement avec la tension appliquée au dipôle, la résistance ohmique étant élevée lorsque la tension est inférieure à une tension d'amorçage et diminuant lorsque la tension augmente au-delà de la tension d'amorçage.

### EXPOSE DE L'INVENTION

L'invention vise donc à proposer un dispositif de protection contre les surtensions, qui n'ait pas les inconvénients relevés ci-dessus. Plus précisément, elle vise à proposer un dispositif de protection contre les surtensions qui comporte un dipôle électrique non linéaire, notamment à varistance, destiné à répondre rapidement aux surtensions apparaissant aux bornes du dispositif, et des moyens pour dériver les courants très élevés directement vers la terre sans passer par le dipôle.

A cet effet, l'invention a pour objet un dispositif de protection contre les surtensions, comportant :
- une première électrode de raccordement en liaison électrique avec une première plage de raccordement,
- une deuxième électrode de raccordement en liaison électrique avec une deuxième plage de raccordement,
- une troisième électrode de commutation d'arc mobile reliée électriquement à la deuxième plage de raccordement,
- une chambre d'extinction d'arc s'ouvrant sur la première et la deuxième électrodes de raccordement,
- des moyens d'entraînement de l'électrode de commutation d'arc mobile par rapport à la première électrode de raccordement d'une position de service à une position de commutation en s'éloignant de la première électrode de raccordement et en se rapprochant de la deuxième électrode de raccordement, de sorte qu'un arc électrique tiré entre la première électrode de raccordement et l'électrode mobile commute entre la première électrode de raccordement et la deuxième électrode de raccordement lorsque l'électrode de commutation d'arc mobile passe de la position de service à la position de commutation,
- un dipôle électrique connecté de telle manière que lorsque l'électrode de commutation d'arc mobile est en position de service, le dipôle électrique est relié à l'électrode de commutation d'arc mobile d'une part et à la première ou la deuxième plages de raccordement d'autre part, et que lorsque l'électrode de commutation d'arc mobile est en position de commutation et qu'un arc électrique est tiré entre la première électrode de raccordement et la deuxième électrode de raccordement, le dipôle électrique est hors circuit, le dipôle électrique ayant une résistance ohmique variant non linéairement avec la tension appliquée au dipôle, la résistance ohmique étant élevée lorsque la tension est inférieure à une tension d'amorçage et diminuant lorsque la tension augmente au-delà de la tension d'amorçage.

En déplaçant l'électrode de commutation en position de commutation, on crée dans un premier temps un arc électrique entre l'électrode mobile et la première électrode de raccordement, ce qui a pour effet immédiat de limiter le courant traversant le dipôle. Lorsque l'électrode de commutation s'approche de la position de commutation, l'arc électrique commute entre les électrodes de raccordement, mettant ainsi le dipôle électrique hors circuit. On obtient donc ainsi une double protection du dipôle.

Préférentiellement, le dipôle électrique est connecté en série entre l'électrode de commutation et la deuxième plage de raccordement. Le dispositif obtenu est alors particulièrement simple. Il est notamment possible de prévoir que l'électrode mobile en position de service soit en contact avec la première électrode de raccordement.

Selon une variante alternative, le dipôle électrique est connecté en série entre la première électrode de raccordement et une quatrième électrode fixe située à distance de la première électrode de raccordement et de telle manière que l'électrode mobile en position de service est reliée électriquement à la quatrième électrode fixe.

Préférentiellement, le dispositif comporte en outre des moyens d'induction électromagnétique de projection pour induire sur un arc électrique formé entre la première électrode de raccordement et l'électrode mobile des efforts électromagnétiques tendant à projeter l'arc vers la chambre d'extinction et/ou tendant à faire commuter l'arc sur la deuxième électrode de raccordement. Les moyens d'induction électromagnétique de projection ont pour fonction de provoquer l'allongement de l'arc, favorisant la limitation du courant de suite, et/ou de favoriser la commutation de l'arc entre les électrodes de raccordement. Naturellement, les forces agissant sur l'arc électrique augmentent avec l'intensité du courant d'arc, ce qui est favorable à une bonne limitation du courant.

Le mouvement de l'électrode de commutation n'est pas nécessairement de grande amplitude et peut être obtenu par tous moyens appropriés. Préférentiellement, les moyens d'entraînement comportent des moyens d'induction électromagnétique de répulsion pour induire sur l'électrode mobile traversée par un courant des efforts électromagnétiques tendant à entraîner l'électrode mobile vers la position de commutation. Les moyens d'induction électromagnétique de répulsion ont l'avantage, par rapport à des moyens d'entraînement purement mécaniques, d'être très rapides. En pratique, les moyens d'induction électromagnétique de répulsion et de projection seront les mêmes: il s'agira par exemple d'une forme de boucle donnée à la première électrode de raccordement.

Selon un mode particulièrement avantageux, les moyens d'induction électromagnétique de répulsion comportent un circuit magnétique d'entraînement pour canaliser vers l'électrode mobile en position de service un flux magnétique engendré par un courant électrique circulant entre la première plage de raccordement et la première électrode de raccordement, de sorte que lorsqu'un courant électrique passe de la première plage de raccordement à l'électrode mobile, des efforts électromagnétiques sont induits dans l'électrode mobile, tendant à entraîner l'électrode mobile vers la position de commutation. Dans ce cas également, le circuit magnétique pourra cumuler une fonction de moyen de projection de l'arc et une fonction d'entraînement de l'électrode mobile.

Les moyens d'entraînement peuvent comporter, éventuellement en combinaison, notamment :
- un relais électromécanique sensible au courant traversant la première électrode de raccordement ou l'électrode mobile ;
- un mécanisme muni d'un organe de manoeuvre mobile entre une position de mise en service à une position de mise hors service et une liaison cinématique entre l'organe de manoeuvre et l'électrode mobile pour entraîner l'électrode mobile dans une position de sectionnement lorsque l'organe de manoeuvre passe de la position de mise en service à la position de mise hors service;
- des moyens de rappel élastique de l'électrode mobile vers la position de service;
- un ressort d'accumulation, se déchargeant en entraînant l'électrode mobile de la position de service à la position de commutation.

Avantageusement, le dipôle électrique comporte une varistance.

Alternativement, on peut prévoir que le dipôle électrique comporte un éclateur. On peut également prévoir que le dipôle électrique comporte un éclateur et/ou une impédance connectés en série entre une varistance d'une part et la deuxième plage de raccordement ou l'électrode mobile d'autre part.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- les figures 1 et 2 représentent un dispositif de protection selon un premier mode de réalisation de l'invention, respectivement en position de service et en position de commutation;
- les figures 3 et 4 représentent un dispositif de protection selon un deuxième mode de réalisation de l'invention, respectivement en position de service et en position de commutation;
- la figure 5 représente un dispositif de protection selon un troisième mode de réalisation de l'invention, dans une position de service;
- les figures 6, 7 , 8 et 9 représentent un dispositif de protection selon un quatrième mode de réalisation de l'invention, respectivement en position de service, en position de sectionnement, dans une première position de commutation et dans une deuxième position de commutation.

### DESCRIPTION DETAILLEE D'UN MODE DE REALISATION

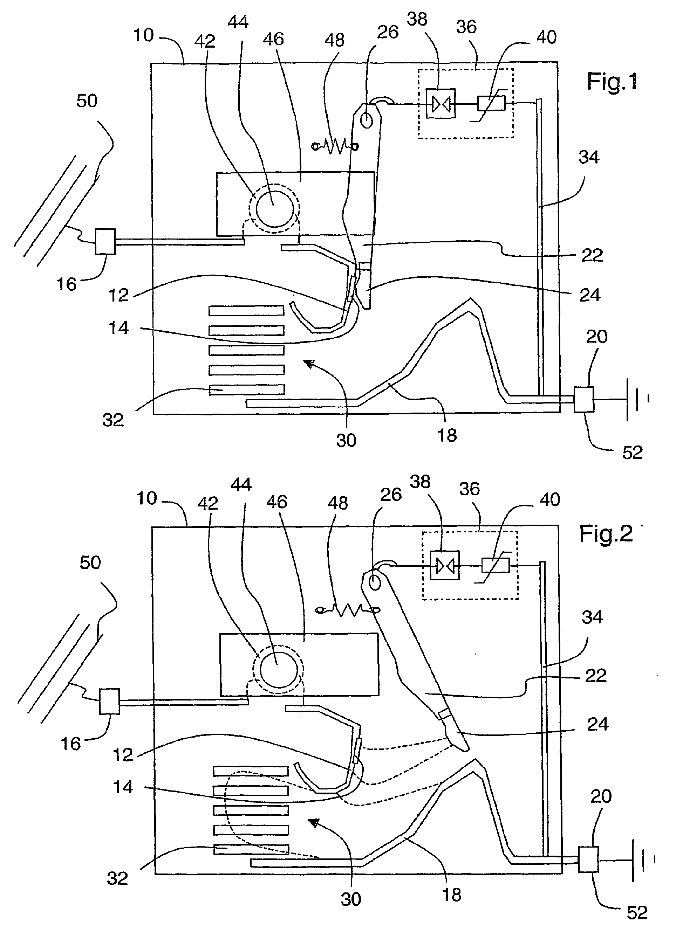

Sur les figures 1 et 2 est représenté un dispositif de protection contre les surtensions suivant un premier mode de réalisation de l'invention. A l'intérieur d'un boîtier moulé 10 en matière synthétique isolante sont disposées une première électrode de raccordement 12 pourvue d'un contact fixe 14 et reliée à une première plage de raccordement 16, une deuxième électrode de raccordement 18 reliée à une deuxième plage de raccordement 20, et une électrode de transfert mobile 22 pourvue d'un contact mobile 24, pivotant autour d'un axe fixe 26 d'une position de service représentée sur la figure 1, assurant le contact entre les deux contacts 14, 24, à une position de commutation représentée sur la figure 2, dans laquelle l'électrode mobile 22 se trouve à proximité de la deuxième électrode de raccordement 18. Les deux électrodes de raccordement 12, 18 sont situées à distance l'une de l'autre, et délimitent l'embouchure d'une chambre d'extinction d'arc 30 munie d'ailettes de désionisation 32.

La deuxième plage de raccordement 20 est également reliée à l'électrode mobile 22 par l'intermédiaire d'une branche de circuit 34 contenant un dipôle électrique d'amorçage 36 constitué par une varistance 40 et un éclateur 38 disposées en série. Ce dipôle 36 se caractérise par une tension d'amorçage en deçà de laquelle le courant traversant le dipôle est nul (résistance ohmique infinie) et au-delà de laquelle le dipôle devient passant, avec une résistance ohmique faible. La présence de l'éclateur 38 permet de garantir l'absence de courant de fuite en cas de vieillissement de la varistance 36. La varistance 36 quant à elle confère au dipôle une courbe tension-courant adéquate, dont la résistance ohmique diminue progressivement lorsque la tension augmente.

Un inducteur 42 (demi-spire ou bobinage) est disposé en série entre la première plage de raccordement 16 et l'électrode de raccordement 12. Cet inducteur 42 est enroulé autour d'un noyau 44 formant la base d'un circuit magnétique en U 46 dont les branches latérales encadrent l'électrode mobile 22, assurant un couplage électromagnétique. Un ressort de rappel 48 de faible raideur rappelle l'électrode mobile 22 dans le sens horaire sur la figure 1, vers l'électrode fixe 12.

Pour fixer l'idée, on a représenté la première plage de raccordement 16 raccordée à une ligne électrique 50 et la deuxième plage de raccordement 20 à la terre 52, bien que la disposition inverse soit également envisageable ainsi que d'autres schémas plus complexes connus du spécialiste des dispositifs de protection contre les surtensions.

Le dispositif fonctionne de la manière suivante.

En l'absence de surtension sur la ligne, la différence de potentiel entre les deux plages de raccordement 16, 20 est inférieure à la tension d'amorçage définie par le dipôle d'amorçage 36. Le dispositif est non passant.

Quant survient une surtension dépassant la tension d'amorçage, le dipôle d'amorçage 36 devient passant et un courant se met à s'écouler de la ligne 50 à la terre 52, en passant par la première plage 16, l'inducteur 42, le contact fixe 14, le contact mobile 24, l'électrode mobile 22, le dipôle d'amorçage 36 et la deuxième plage 20. La suite de la séquence de protection dépend de l'intensité du courant traversant les contacts.

Si l'intensité du courant n'est pas très élevée, le champ électromagnétique induit est insuffisant pour compenser la pression de contact définie par le ressort de rappel 48 et provoquer un soulèvement du contact mobile 24. Dès que l'onde de courant est passée, la différence de potentiel aux bornes du dipôle d'amorçage 36 repasse en dessous de la tension d'amorçage et le dipôle d'amorçage redevient non passant. Le courant de suite est donc coupé par le dipôle d'amorçage 36.

Si l'intensité est plus élevée, le champ électromagnétique induit par le courant traversant l'inducteur 42 est suffisant pour compenser la pression de contact définie par le ressort de rappel 48 et projeter l'électrode mobile 22 vers la position de commutation représentée sur la figure 2. Un arc électrique (en traits mixtes fins sur la figure 2) se forme entre les contacts 14, 24 dès leur séparation, et le pied de l'arc commute se déplace rapidement sur la première électrode 12. Il se peut que l'intensité du courant ne soit pas suffisamment importante pour projeter l'arc dans la chambre mais dans ce cas la répulsion électromagnétique empêche au moins la retombée de l'électrode mobile. Le courant est alors coupé par le dipôle d'amorçage, en série avec l'arc tiré entre les contacts. Si le courant est très important, le champ magnétique induit par l'effet de boucle dû à la forme de la première électrode, et par le circuit magnétique concentrant au voisinage de l'électrode mobile 22 le champ induit par l'inducteur 42, devient rapidement très élevé, et l'arc est poussé vers la chambre d'extinction 30. L'électrode mobile 22, en se déplaçant vers sa position de séparation, se rapproche de la deuxième électrode 18 et permet ainsi une commutation de l'arc sur la deuxième électrode 18. A ce moment, le courant qui circulait jusque-là par la branche 34 de circuit électrique contenant le dipôle d'amorçage 36, commute également sur la branche formée par la première électrode 12, l'arc électrique, la deuxième électrode 18 et la deuxième plage de raccordement 20. Cette commutation met hors-circuit le dipôle d'amorçage 36 et permet de le préserver.

Lorsque le dispositif est soumis à une onde de courant encore plus importante, du type courant de foudre directe, suivie d'un courant de suite, un premier arc se forme entre les contacts 14, 24 quasi instantanément et est projeté violemment par l'effet de boucle électromagnétique jusqu'au fond de la chambre 30, avant même que l'électrode mobile 22 ait atteint sa position de séparation, à proximité de la deuxième électrode.. Dans un deuxième temps, un courant de suite apparaît, correspondant à un deuxième arc dont le comportement est comparable à celui décrit aux paragraphes précédents. Ce deuxième arc s'éteint dans les conditions décrites au paragraphe précédent.

Dans tous les cas où le courant est suffisamment élevé pour soulever l'électrode mobile 22, la répulsion électromagnétique empêche la retombée de l'électrode mobile 22 jusqu'à ce que le courant s'annule dans l'électrode mobile. On choisit la masse de l'électrode mobile 22 et la raideur du ressort de rappel 48 en fonction du seuil à partir duquel on souhaite limiter le courant dans le dipôle électrique 36, mais également pour assurer que l'électrode mobile ne retombe pas sur la première électrode de raccordement avant que l'arc entre les électrodes de raccordement soit éteint. En pratique, on choisit donc une électrode 22 de très faible inertie, et un ressort de faible raideur.

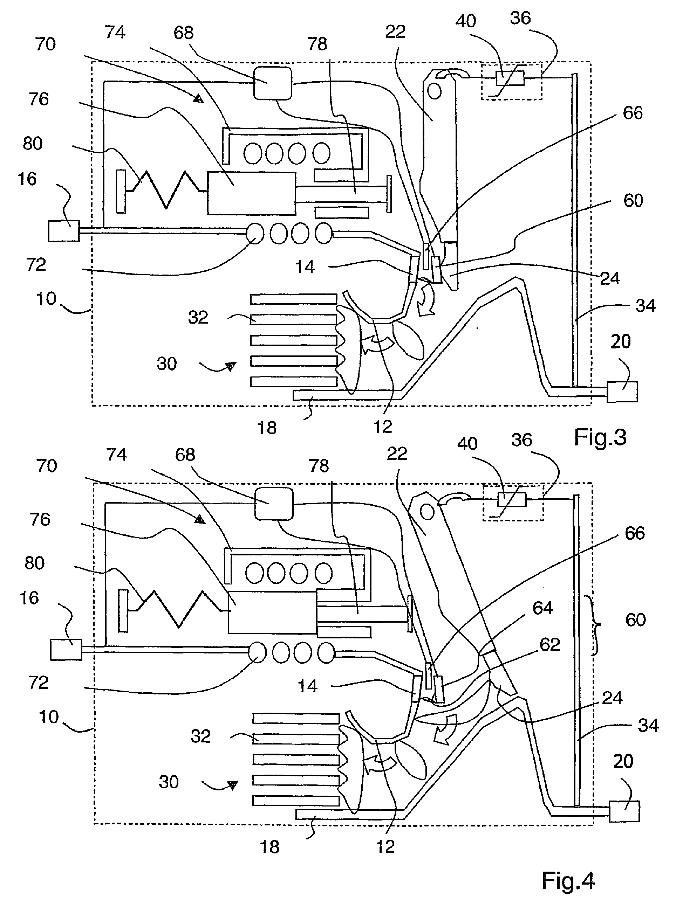

Sur les figures 3 et 4 est illustré un dispositif de protection selon un deuxième mode de réalisation de l'invention. Ce dispositif est de constitution voisine de celui du premier mode de réalisation, de sorte que les mêmes signes de référence ont été pris pour désigner des éléments identiques ou similaires. Ce dispositif comporte, logées dans un boîtier 10 en matériau isolant, une première électrode de raccordement 12 reliée à une première plage de raccordement 16, une deuxième électrode de raccordement 18 reliée à une deuxième plage de raccordement 20, une électrode mobile 22 pivotant autour d'un axe fixe 26, et une pastille fixe conductrice 60 présentant une face 62 constituant une électrode fixe (figure 4) en regard de la première électrode de raccordement 12 et une face opposée 64 constituant une électrode de contact sur laquelle repose l'électrode mobile. Les électrodes sont disposées en regard d'une chambre de coupure 30 munie d'ailettes de refroidissement 32. Les deux électrodes de raccordement 12, 18 se font face à l'entrée de la chambre d'extinction d'arc 30.

Entre la première électrode de raccordement 12 et la pastille 60 est disposée une électrode d'amorçage 66, commandée par un circuit d'amorçage 68 détectant une différence de potentiel entre la première plage de raccordement 16 et la pastille 60. Un relais électromécanique 70 est disposé en face du bras pivotant. Le relais 70 comporte un bobinage 72 branché en série entre la plage de raccordement 10 et l'électrode fixe 12, une culasse 74 formant un circuit magnétique, une armature mobile 76 prolongée par un percuteur 78, et un ressort de rappel 80 de l'armature mobile 76 vers une position de repos, vers la gauche sur les figures 3 et 4.

L'électrode mobile 22 est reliée électriquement à la deuxième plage de raccordement 20 et à la deuxième électrode de raccordement 18 par l'intermédiaire d'une branche de circuit électrique 34 comportant un dipôle électrique 36 constitué par une varistance 40.

En fonctionnement, l'une des plages de raccordement est reliée à une ligne électrique 50 et l'autre à la terre 52. En service, le dispositif est non passant puisque la première électrode de raccordement 12 est disposée à distance de l'électrode 62 de la pastille 60. Si la différence de potentiel entre l'électrode fixe et la pastille dépasse un seuil déterminé par le circuit d'amorçage 68 et supérieur à la tension d'amorçage de la varistance 40, l'électrode d'amorçage 66 est portée par le circuit d'amorçage 68 à une tension telle qu'un arc est amorcé entre l'électrode d'amorçage 66 et l'une des électrodes 12, 62. Cet arc s'établi aussitôt entre l'électrode de raccordement 12 et la pastille 60, et le courant électrique trouve un chemin entre les plages de raccordement 16, 20, passant par l'électrode de raccordement 12, l'arc, la pastille 60, l'électrode mobile 22 en position de repos et la varistance 36 devenue passante. La forme en boucle de l'électrode 12 induit sur l'arc des efforts électromagnétiques propulsant l'arc vers la chambre 30. De ce fait, l'arc commute directement sur la deuxième électrode de raccordement et s'enfonce dans la chambre pour s'y éteindre à la fin de l'onde de courant. L'extinction de l'arc ouvre le circuit et la ligne se retrouve isolée de la terre. La durée totale de la vie de l'arc, de quelques dizaines de microsecondes, est suffisamment faible pour que le relais n'intervienne pas, du fait de son inertie.

Dans certaines circonstances toutefois, un arc électrique peut perdurer entre la première électrode de raccordement 12 et la pastille 60, soit du fait d'un courant de suite, soit du fait d'une dégradation des électrodes dans le temps. Dans un pareil cas, le relais électromécanique 70 est alimenté suffisamment longtemps pour entraîner l'équipage mobile 76 dont l'extrémité 78 vient percuter l'électrode mobile 22 et la projeter en position de commutation, comme représenté sur la figure 4. L'arc commute alors entre l'électrode de raccordement 12 et l'électrode mobile 22 puis entre les deux électrodes de raccordement 12, 18 et s'allonge jusqu'à pénétrer dans la chambre. A partir du moment où l'arc a commuté entre les deux électrodes de raccordement 12, 18, la branche de circuit comportant la varistance 36 est mise hors circuit ce qui assure la protection de la varistance 40. L'arc est alors libre de s'enfoncer complètement dans la chambre 30 où il rencontre les ailettes de désionisation 32 qui le refroidissent et provoquent son extinction. Un accrochage peut être prévu pour empêcher la retombée de l'électrode mobile 22. Un mécanisme de réarmement peut être prévu pour permettre le retour de l'électrode mobile et/ou du relais 70 en position de service.

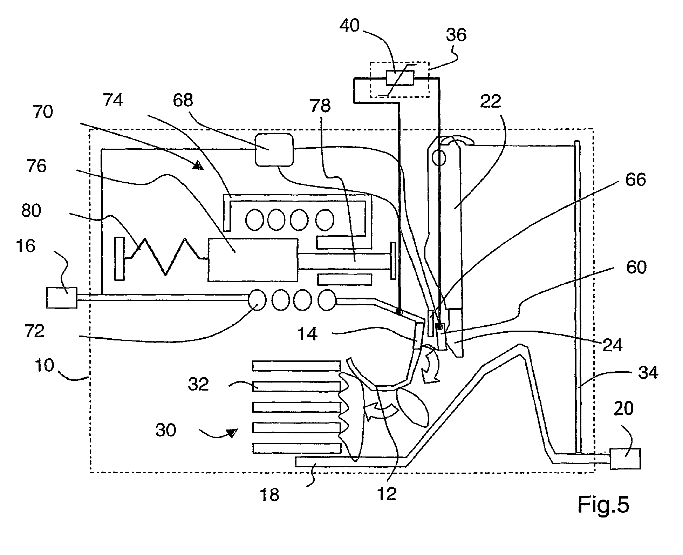

Sur la figure 5 a été représenté un dispositif selon un troisième mode de réalisation de l'invention, qui ne diffère du dispositif selon le deuxième mode de réalisation que par le branchement spécifique du dipôle 36, entre la première électrode de raccordement 12 et la pastille 60. Dans ce cas, la varistance 40 du dipôle 36 se trouve en parallèle avec l'éclateur constitué par la première électrode de raccordement 12, la pastille fixe 60 et l'électrode d'amorçage 66, de sorte que la tension d'amorçage est pilotée seulement par le dipôle 36, alors que dans le deuxième mode de réalisation la tension était définie par le dipôle en série avec l'éclateur. Dans ce mode de réalisation également, le dipôle 36 se retrouve hors circuit lorsque l'arc électrique a commuté entre les électrodes de raccordement 12, 18.

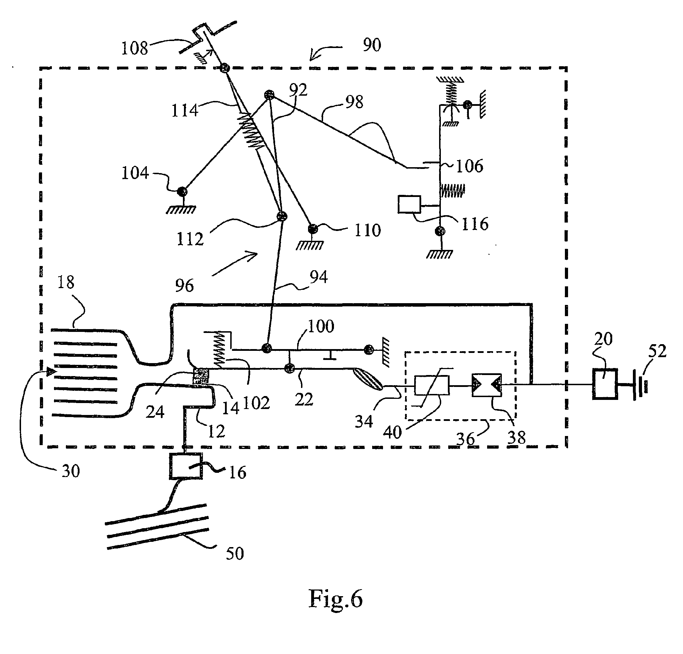

Sur les figures 6 à 9 a été représenté un dispositif de protection selon un quatrième mode de réalisation. Ce dispositif est de constitution voisine de celui du premier mode de réalisation, de sorte que les mêmes signes de référence ont été pris pour désigner des éléments identiques ou similaires. Comme le dispositif selon le premier mode de réalisation, il comporte une première électrode de raccordement 12 pourvue d'un contact fixe 14 et reliée à une première plage de raccordement 16, une deuxième électrode de raccordement 18 reliée à une deuxième plage de raccordement 20, et une électrode mobile 22. La première électrode de raccordement 12 est conformée en U pour favoriser un effet de répulsion électromagnétique sur l'électrode mobile 22 . Pour fixer les idées, la première plage de raccordement 16 a été raccordée à une ligne 50 et la deuxième plage de raccordement a été raccordée à la terre 52. L'électrode mobile 22 est pourvue d'un contact 24 coopérant, dans la position de service représentée sur la figure 6, avec le contact fixe 14. Les deux électrodes de raccordement 12, 18 sont situées à distance l'une de l'autre, et délimitent l'embouchure d'une chambre d'extinction d'arc 30 munie d'ailettes de désionisation 32. La deuxième plage de raccordement 20 est également reliée à l'électrode mobile 22 par l'intermédiaire d'une branche de circuit 34 sur laquelle est branché en série un dipôle électrique d'amorçage 36 comportant une varistance 40 et un éclateur 38 disposés en série.

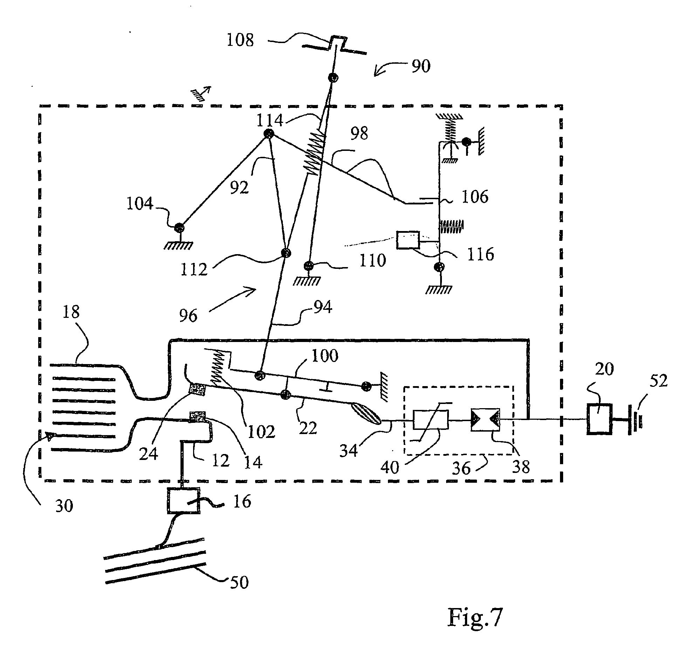

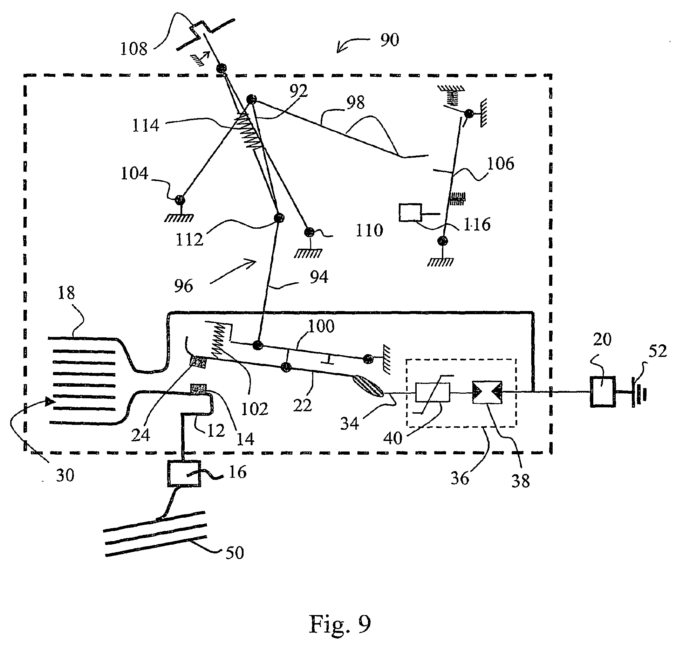

Le dispositif selon le quatrième mode de réalisation diffère des précédents essentiellement par le fait qu'il est pourvu d'un mécanisme d'ouverture 90 du type que l'on trouve habituellement dans les disjoncteurs. Un tel mécanisme comporte une bielle supérieure 92 et une bielle inférieure 94 formant une articulation à genouillère 96 reliant un crochet 98 à un barreau porte électrode 100, supportant l'électrode mobile 22 par l'intermédiaire d'un ressort de pression de contact 102. Le crochet 98 pivote autour d'un axe fixe 104 et est retenu par un verrou 106 dans une position de verrouillage. Une poignée 108 pivotant autour d'un axe géométrique fixe 110 est reliée à l'axe 112 d'articulation de la genouillère 96 par l'intermédiaire d'un ressort d'accumulation 114. Un relais électromécanique 116 pilote la position du verrou en fonction de paramètres électriques tels que l'intensité du courant traversant le dipôle électrique 36 en fonction du temps. En position fermée du mécanisme, sur la figure 6, le crochet 98 est en position de verrouillage et l'électrode mobile 22 est en position de service, en contact avec la première électrode de raccordement 12. Il est alors possible d'ouvrir l'appareillage en faisant basculer la poignée 108 vers la droite sur la figure, ce qui entraîne le porte électrode 100 par l'intermédiaire de la genouillère 96 qui se plie. En position ouverte du mécanisme (Figure 7), l'électrode mobile 22 se trouve à proximité de la deuxième électrode de raccordement 18. Inversement, il est possible de refermer le mécanisme en faisant basculer de nouveau la poignée 108 qui déplie la genouillère 96 et ramène le porte électrode 100 et l'électrode mobile 22 en position de service. A partir de la position fermée, il est également possible de déplacer rapidement le porte électrode 100 sans manoeuvrer la poignée 108, en actionnant le verrou 106 qui libère le crochet 98. La charge résiduelle du ressort d'accumulation 114 dans la position fermée est alors suffisante pour entraîner le porte électrode 100 et l'électrode mobile 22 dans une position de commutation représentée sur la figure 9, à proximité de la deuxième électrode de raccordement 18, le mécanisme se retrouvant alors dans une position déclenchée.

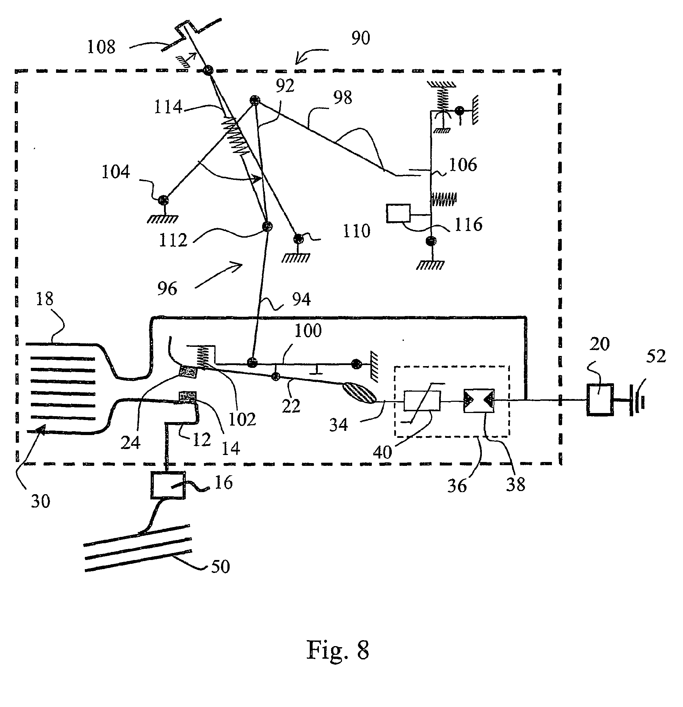

Le fonctionnement du dispositif selon le quatrième mode de réalisation est similaire à celui du premier mode de réalisation. En cas de différence de potentiel importante entre les deux électrodes de raccordement 12, 18, dépassant la tension d'amorçage du dipôle 36, le dipôle 36 devient passant, permettant un écoulement du courant à la terre. Si l'intensité du courant est importante, les efforts électromagnétiques de répulsion induits sur l'électrode mobile 22 sont suffisants pour soulever l'électrode 22 en comprimant le ressort de pression de contact 102, le porte électrode 100 demeurant immobile, comme représenté sur la figure 8. Dès la séparation des contacts, un arc électrique apparaît, qui tend à limiter le courant traversant le dipôle 36. La forme en U de l'électrode de raccordement 12 tend également à favoriser l'allongement de l'arc vers la chambre d'extinction 30. Bien que le mécanisme reste immobile, le léger rapprochement entre l'électrode mobile 22 et la deuxième électrode de raccordement 18, combiné au champ électromagnétique intense à l'entrée de la chambre d'extinction d'arc 30, est suffisant pour que l'arc s'allonge en se courbant dans la chambre, puis commute sur la deuxième électrode de raccordement 18. On peut donc considérer que la position de répulsion de l'électrode mobile 22 est une position de commutation.

Si toutefois, l'intensité du courant reste élevée pendant une durée suffisante, le relais électromécanique 116 actionne le verrou 106 qui libère le crochet 98. Le mécanisme est entraîné vers la position déclenchée représentée sur la figure 9, provoquant un pivotement du porte électrode 100 et de l'électrode mobile 22 qui rapproche l'électrode mobile 22 de la deuxième électrode de raccordement 18. Il y a alors commutation de l'arc sur la deuxième électrode de raccordement 18, et le dipôle 36 se retrouve hors circuit. L'arc s'étire puis s'éteint dans la chambre d'extinction d'arc 30. La position déclenchée du mécanisme correspond donc une deuxième position de commutation de l'électrode mobile 22.

Le mécanisme offre des avantages supplémentaires. Tout d'abord, il permet un sectionnement entre la ligne et la terre par manoeuvre de la poignée 108 en position ouverte (figure 7). Un verrouillage de la poignée 108 en position ouverte peut d'ailleurs être prévu pour permettre des interventions en amont ou en aval du dispositif

Par ailleurs, il est possible de déclencher le mécanisme lorsqu'un courant de fuite est détecté dans la branche 34 comportant la varistance. On obtient ainsi un déclenchement de fin de vie du dipôle, et une visualisation appropriée, par le positionnement caractéristique de la poignée 108.

Naturellement, diverses modifications sont possibles.

Le dipôle peut être constitué uniquement d'une varistance, ou bien d'une varistance en série avec un éclateur ou une impédance, ou bien d'autres éléments d'effets similaires. Dans tous les cas, le dipôle d'amorçage a une caractéristique d'amorçage tension-courant qui permet de définir une tension d'amorçage en deçà de laquelle le courant traversant le dipôle est nul ou très faible (résistance ohmique très élevée), et au-delà de laquelle le dipôle devient passant, avec une résistance ohmique plus faible. Lorsque le dipôle est passant et que le courant augmente, la tension aux bornes du dipôle doit toutefois être ou devenir plus importante que la tension d'un arc tiré entre les électrodes de raccordement.

Le mécanisme du quatrième mode de réalisation de l'invention n'est qu'une possibilité parmi d'autres, et l'homme du métier pourra choisir tout mécanisme couramment employé pour les disjoncteurs, assurant une fonction de déclenchement.

L'électrode mobile en position de commutation peut toucher la deuxième électrode de raccordement. On peut également prévoir une deuxième électrode de raccordement formant un U dans un plan géométrique perpendiculaire au plan de déplacement de l'électrode mobile, l'électrode mobile passant d'une position de service située d'un côté du plan géométrique à une position de commutation située de l'autre côté du plan géométrique, et traversant le plan géométrique entre les deux branches du U formé par la deuxième électrode de raccordement, pour assurer la commutation de l'arc.

Il est à souligner que sur les figures, la position de commutation de l'électrode mobile est représentée de manière schématique, relativement éloignée de la position de service. En pratique toutefois, il est possible d'obtenir une commutation d'arc avec un mouvement de faible amplitude.

## Revendications

1. - Dispositif de protection contre les surtensions, comportant
- une première électrode de raccordement (12) en liaison électrique avec une première plage de raccordement (16),
- une deuxième électrode de raccordement (18) en liaison électrique avec une deuxième plage de raccordement (20),
- une troisième électrode de commutation d'arc mobile (22) reliée électriquement à la deuxième plage de raccordement (20),
- une chambre d'extinction d'arc (30) s'ouvrant sur la première (12) et la deuxième (18) électrodes de raccordement,
- des moyens d'entraînement de l'électrode de commutation d'arc mobile par rapport à la première électrode de raccordement (12) d'une position de service à une position de commutation en s'éloignant de la première électrode de raccordement (12) et en se rapprochant de la deuxième électrode de raccordement (18), de sorte qu'un arc électrique tiré entre la première électrode de raccordement (12) et l'électrode mobile (22) commute entre la première électrode de raccordement (12) et la deuxième électrode de raccordement (18) lorsque l'électrode de commutation d'arc mobile (22) passe de la position de service à la position de commutation,
- un dipôle électrique (36) connecté de telle manière que lorsque l'électrode de commutation d'arc mobile (22) est en position de service, le dipôle électrique (36) est relié à l'électrode de commutation d'arc mobile (22) d'une part et à la première ou la deuxième plages de raccordement d'autre part, et que lorsque l'électrode de commutation d'arc mobile (22) est en position de commutation et qu'un arc électrique est tiré entre la première électrode de raccordement (12) et la deuxième électrode de raccordement (18), le dipôle électrique est hors circuit, le dipôle électrique ayant une résistance ohmique variant non linéairement avec la tension appliquée au dipôle, la résistance ohmique étant élevée lorsque la tension est inférieure à une tension d'amorçage et diminuant lorsque la tension augmente au-delà de la tension d'amorçage.

2. - Dispositif selon la revendication 1, dans lequel le dipôle électrique (36) est connecté en série entre l'électrode de commutation d'arc mobile (22) et la deuxième plage de raccordement.

3. - Dispositif selon la revendication 2, dans lequel l'électrode de commutation d'arc mobile (22) en position de service est en contact avec la première électrode de raccordement (12).

4. - Dispositif selon la revendication 1, dans lequel le dipôle électrique (36) est connecté en série entre la première électrode de raccordement (12) et une quatrième électrode fixe (62) située à distance de la première électrode de raccordement (12) et de telle manière que l'électrode de commutation d'arc mobile (22) en position de service est reliée électriquement à la quatrième électrode fixe (62).

5. - Dispositif selon l'une quelconque des revendications précédentes, comportant en outre des moyens d'induction électromagnétique de projection pour induire sur un arc électrique formé entre la première électrode de raccordement (12) et l'électrode de commutation d'arc mobile (22) des efforts électromagnétiques tendant à projeter l'arc vers la chambre d'extinction et/ou tendant à faire commuter l'arc sur la deuxième électrode de raccordement (18).

6. - Dispositif selon l'une quelconques des revendications précédentes, dans lequel les moyens d'entraînement comportent des moyens d'induction électromagnétique de répulsion pour induire sur l'électrode de commutation d'arc mobile traversée par un courant des efforts électromagnétiques tendant à entraîner l'électrode de commutation d'arc mobile (22) vers la position de commutation.

7. - Dispositif selon la revendication 6, dans lequel les moyens d'induction électromagnétique de répulsion comportent un circuit magnétique d'entraînement (46) pour canaliser vers l'électrode de commutation d'arc mobile en position de service un flux magnétique engendré par un courant électrique circulant entre la première plage de raccordement (16) et la première électrode de raccordement (12), de sorte que lorsqu'un courant électrique passe de la première plage de raccordement (16) à l'électrode de commutation d'arc mobile (22), des efforts électromagnétiques sont induits dans l'électrode de commutation d'arc mobile (22), tendant à entraîner l'électrode de commutation d'arc mobile (22) vers la position de commutation.

8. - Dispositif selon l'une quelconque des revendications précédentes, dans lequel les moyens d'entraînement comportent un relais électromécanique (70) sensible au courant traversant la première électrode de raccordement (12) ou l'électrode de commutation d'arc mobile (22).

9. - Dispositif selon l'une quelconque des revendications précédentes, dans lequel les moyens d'entraînement comportent un mécanisme (90) muni d'un organe de manoeuvre (108) mobile entre une position de mise en service à une position de mise hors service et une liaison cinématique entre l'organe de manoeuvre et l'électrode de commutation d'arc mobile pour entraîner l'électrod de commutation d'arc mobile (22) dans une position de sectionnement lorsque l'organe de manoeuvre passe de la position de mise en service à la position de mise hors service.

10. - Dispositif selon l'une quelconque des revendications précédentes, dans lequel les moyens d'entraînement comportent des moyens de rappel élastique (48, 102) de l'électrode de commutation d'arc mobile vers la position de service.

11. - Dispositif selon l'une quelconque des revendications précédentes, dans lequel les moyens d'entraînement comportent un ressort d'accumulation (114), se déchargeant en entraînant l'électrod de commutation d'arc mobile (22) de la position de service à la position de commutation.

12. - Dispositif selon l'une quelconque des revendications précédentes, dans lequel le dipôle électrique (36) comporte une varistance (40).

## Claims

1. A voltage surge protection device comprising:
- a first connecting electrode (12) in electrical connection with a first connecting pad (16),
- a second connecting electrode (18) in electrical connection with a second connecting pad (20),
- a third movable arc switching electrode (22) electrically connected to the second connecting pad (20),
- an arc chute (30) opening out onto the first (12) and second (18) connecting electrodes,
- means for driving the movable arc switching electrode with respect to the first connecting electrode (12) from an operating position to a switched position moving away from the first connecting electrode (12) and moving towards the second connecting electrode (18) so that an electric arc drawn between the first connecting electrode (12) and the movable electrode (22) switches between the first connecting electrode (12) and the second connecting electrode (18) when the movable arc switching electrode (22) moves from the operating position to the switched position,
- an electric dipole (36) connected in such a way that when the movable arc switching electrode (22) is in the operating position, the electric dipole (36) is connected both to the movable arc switching electrode (22) and to the first or second connecting pads, and that when the movable arc switching electrode (22) is in the switched position and an electric arc is drawn between the first connecting electrode (12) and the second connecting electrode (18), the electric dipole is disconnected from the circuit, the electric dipole having an ohmic resistance varying in non-linear manner with the voltage applied to the dipole, the ohmic resistance being high when the voltage is lower than an ignition voltage and decreasing when the voltage increases above the ignition voltage.

2. The device according to claim 1, wherein the electric dipole (36) is connected in series between the movable arc switching electrode (22) and the second connecting pad.

3. The device according to claim 2, wherein the movable arc switching electrode (22) in the operating position is in contact with the first connecting electrode (12).

4. The device according to claim 1, wherein the electric dipole (36) is connected in series between the first connecting electrode (12) and a fixed fourth electrode (62) situated at a distance from the first connecting electrode (12) and in such a way that the movable arc switching electrode (22) in the operating position is electrically connected to the fixed fourth electrode (62).

5. The device according to any one of the foregoing claims, further comprising electromagnetic induction projection means to induce electromagnetic forces on an electric arc formed between the first connecting electrode (12) and the movable arc switching electrode (22) tending to project the arc to the arc chute and/or tending to make the arc switch on the second connecting electrode (18).

6. The device according to any one of the foregoing claims, wherein the driving means comprise electromagnetic induction repulsion means to induce electromagnetic forces on the movable arc switching electrode through which a current is flowing tending to drive the movable arc switching electrode (22) to the switched position.

7. The device according to claim 6, wherein the electromagnetic induction repulsion means comprise a magnetic driving circuit (46) to channel a magnetic flux generated by an electric current flowing between the first connecting pad (16) and the first connecting electrode (12) to the movable arc switching electrode in the operating position, so that when an electric current flows from the first connecting pad (16) to the movable arc switching electrode (22), electromagnetic forces are induced in the movable arc switching electrode (22), tending to drive the movable arc switching electrode (22) to the switched position.

8. The device according to any one of the foregoing claims, wherein the driving means comprise an electromechanical relay (70) sensitive to the current flowing in the first connecting electrode (12) or the movable arc switching electrode (22).

9. The device according to any one of the foregoing claims, wherein the driving means comprise a mechanism (90) equipped with a movable means for operation (108) between an operating position and a disconnection position and a kinematic link between the means for operation and the movable arc switching electrode to drive the movable arc switching electrode (22) to a disconnected position when the means for operation move from the operating position to the disconnection position.

10. The device according to any one of the foregoing claims, wherein the driving means comprise flexible return means (48, 102) for returning the movable arc switching electrode to the operating position.

11. The device according to any one of the foregoing claims, wherein the driving means comprise an energy storage spring (114), discharging when driving the movable arc switching electrode (22) from the operating position to the switched position.

12. The device according to any one of the foregoing claims, wherein the electric dipole (36) comprises a variable resistor (40).

## Patentansprüche

1. - Überspannungs-Schutzeinrichtung, die
- eine mit einer ersten Anschlussklemme (16) elektrisch verbundene erste Anschlusselektrode (12),
- eine mit einer zweiten Anschlussklemme (20) elektrisch verbundene zweite Anschlusselektrode (18),
- eine mit der zweiten Anschlussklemme (20) elektrisch verbundene dritte, bewegbare Lichtbogen-Umschaltelektrode (22),
- eine Lichtbogenlöschkammer (30), die sich zur ersten (12) und zur zweiten Anschlusselektrode (18) hin öffnet,
- Antriebsmittel zur Verschiebung der bewegbaren Lichtbogen-Umschaltelektrode in Bezug zur ersten Anschlusselektrode (12) von einer Betriebsstellung in eine Umschaltstellung, wobei sich die Umschaltelektrode von der ersten Anschlusselektrode (12) entfernt und der zweiten Anschlusselektrode (18) annähert, derart dass ein zwischen der ersten Anschlusselektrode (12) und der bewegbaren Elektrode (22) gezogener Lichtbogen zwischen die erste Anschlusselektrode (12) und die zweite Anschlusselektrode (18) überspringt, wenn die bewegbare Lichtbogen-Umschaltelektrode (22) von der Betriebsstellung in die Umschaltstellung übergeht,
- sowie einen elektrischen Dipol (36) umfasst, der so geschaltet ist, dass er in der Betriebsstellung der bewegbaren Lichtbogen-Umschaltelektrode (22) einerseits mit der bewegbaren Lichtbogen-Umschaltelektrode (22) und andererseits mit der ersten oder der zweiten Anschlusselektrode verbunden ist und dass er freigeschaltet ist, wenn sich die bewegbare Lichtbogen-Umschaltelektrode (22) in der Umschaltstellung befindet und ein Lichtbogen zwischen der ersten Anschlusselektrode (12) und der zweiten Anschlusselektrode (18) abbrennt, wobei der elektrische Dipol einen ohmschen Widerstand aufweist, der sich nichtlinear mit der am Dipol anliegenden Spannung verändert und einen hohen Wert aufweist, solange die Spannung unterhalb einer Zündspannung liegt, sowie abnimmt, wenn die Spannung diese Zündspannung überschreitet.

2. - Einrichtung nach Anspruch 1, bei der der elektrische Dipol (36) in Reihe zwischen die bewegbare Lichtbogen-Umschaltelektrode (22) und die zweite Anschlusselektrode geschaltet ist.

3. - Einrichtung nach Anspruch 2, bei der die bewegbare Lichtbogen-Umschaltelektrode (22) in der Betriebsstellung in Kontakt mit ersten Anschlusselektrode (12) steht.

4. - Einrichtung nach Anspruch 1, bei der der elektrische Dipol (36) in Reihe zwischen die erste Anschlusselektrode (12) und eine feststehende vierte Elektrode (62) geschaltet ist, die entfernt von der ersten Anschlusselektrode (12) so angeordnet ist, dass die bewegbare Lichtbogen-Umschaltelektrode (22) in der Betriebsstellung elektrisch mit der feststehenden vierten Elektrode (62) verbunden ist.

5. - Einrichtung nach irgendeinem der vorhergehenden Ansprüche, die darüber hinaus elektromagnetische Induktions-Treibmittel umfasst, um einen zwischen der ersten Anschlusselektrode (12) und der bewegbaren Lichtbogen-Umschaltelektrode (22) brennenden Lichtbogen mit elektromagnetischen Kräften zu beaufschlagen, die bestrebt sind, den Lichtbogen in Richtung der Lichtbogenlöschkammer zu treiben und/oder auf die zweite Anschlusselektrode (18) umzulenken.

6. - Einrichtung nach irgendeinem der vorhergehenden Ansprüche, bei der die Antriebsmittel elektromechanische Induktions-Rückstoßmittel umfassen, um die stromdurchflossene bewegbare Lichtbogen-Umschaltelektrode mit elektromagnetischen Kräften zu beaufschlagen, die bestrebt sind, die bewegbare Lichtbogen-Umschaltelektrode (22) in Richtung der Umschaltstellung zu verschieben.

7. - Einrichtung nach Anspruch 6, bei der die elektromechanischen Induktions-Rückstoßmittel einen Antriebs-Magnetkreis (46) umfassen, um in der Betriebsstellung der bewegbaren Lichtbogen-Umschaltelektrode einen magnetischen Fluss, der durch einen zwischen der ersten Anschlussklemme (16) und der ersten Anschlusselektrode (12) fließenden Strom erzeugt wird, in Richtung der bewegbaren Lichtbogen-Umschaltelektrode zu leiten, derart dass bei einem Stromfluss von der ersten Anschlusselektrode (16) zur bewegbaren Lichtbogen-Umschaltelektrode (22) elektromagnetische Kräfte auf die bewegbare Lichtbogen-Umschaltelektrode (22) wirken, die bestrebt sind, die bewegbare Lichtbogen-Umschaltelektrode (22) in die Umschaltstellung zu verschieben.

8. - Einrichtung nach irgendeinem der vorhergehenden Ansprüche, bei der die Antriebsmittel ein elektromechanisches Relais (70) umfassen, das durch den über die erste Anschlusselektrode (12) oder die bewegbare Lichtbogen-Umschaltelektrode (22) fließenden Strom angesteuert wird.

9. - Einrichtung nach irgendeinem der vorhergehenden Ansprüche, bei der die Antriebsmittel einen Mechanismus (90) mit einem beweglichen Betätigungsorgan (108), das zwischen einer Einschaltstellung und einer Ausschaltstellung verschoben werden kann, sowie eine zwischen dem Betätigungsorgan und der bewegbaren Lichtbogen-Umschaltelektrode angeordnete mechanische Verbindung umfassen, die dazu dient, beim Übergang des Betätigungsorgans von der Einschaltstellung in die Ausschaltstellung die bewegbare Lichtbogen-Umschaltelektrode (22) in eine Trennstellung zu verbringen.

10. - Einrichtung nach irgendeinem der vorhergehenden Ansprüche, bei der die Antriebsmittel Rückstell-Federmittel (48, 102) umfassen, um die bewegbare Lichtbogen-Umschaltelektrode in die Betriebsstellung zurückzuführen.

11. - Einrichtung nach irgendeinem der vorhergehenden Ansprüche, bei der die Antriebsmittel eine Kraftspeicherfeder (114) umfassen, die sich unter Mitführung der bewegbaren Lichtbogen-Umschaltelektrode (22) von der Betriebsstellung in die Umschaltstellung entspannt.

12. - Einrichtung nach irgendeinem der vorhergehenden Ansprüche, bei der der elektrische Dipol (36) einen Varistor (40) umfasst.
